# EUROPEAN PATENT APPLICATION

(11) **EP 0 561 318 A1**
(43) Date of publication of application: **22.09.1993**
(21) Application number: 93104145.3
(22) Date of filing: 15.03.1993
(51) Int. Cl.: E02D 27/32, G01C 5/04

(54) **Foundation and manufacturing method therefor, and method and apparatus for measuring vertical sinkage of foundation**

(30) Priority: 19.03.1992 JP 63411/92
(71) Applicant: HITACHI, LTD., Chiyoda-ku, Tokyo 101 (JP)
(72) Inventor: Masuyama, Iwao, Katsuta-shi (JP); Nabeya, Yoshikatsu, Hitachi-shi (JP)
(74) Representative: Patentanwälte Beetz - Timpe - Siegfried Schmitt-Fumian - Mayr

(57) **Abstract**

The invention aims to provide a foundation on which heavy installation such as a turbine or the like is mounted and a producing method therefor, which foundation is suitable for rapidly and accurately measuring an amount of vertical sinkage of the foundation, and a method and an apparatus for measuring the amount of vertical sinkage of the foundation. To this end, a plurality of liquid containers 31 whose top ends are opened are buried on an upper surface portion of the foundation 30 on which heavy installation is mounted, and bottom portions of the upwardly opened liquid containers 31 are communicated with each other through a connecting conduit 32 in the foundation 30. The connecting conduit 32 is provided in the foundation 30 so that it inclinedly extends through the foundation from one side toward the other side. Stands 33 are further fixed in the upwardly opened liquid containers 31. When measuring the amount of vertical sinkage of the foundation, a valve 38 of the connecting conduit 32 is opened to supply water from the lower side of the connecting conduit 32 into the liquid containers 31. A level of water in each liquid container 31 is measured by a depth micrometer 42 and a tester 43.

## Description

### BACKGROUND OF THE INVENTION

### Industrial Field of the Invention

The present invention relates to a foundation on which heavy equipments such as a steam turbine, a gas turbine or the like are installed, and more particularly, to a foundation which is suitable for rapidly and accurately measuring an amount of vertical sinkage of the foundation and a method of producing the foundation, and a method and an apparatus for measuring an amount of vertical sinkage of the foundation.

### Description of the Prior Art

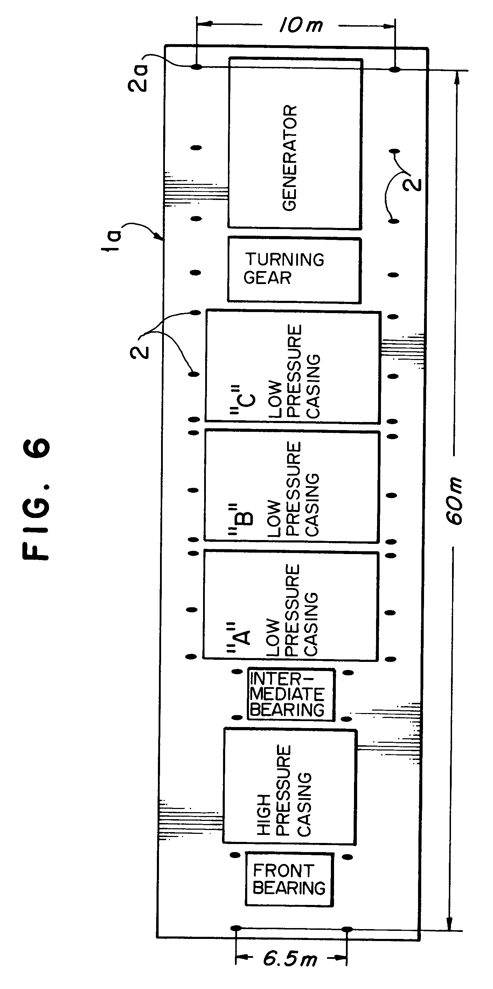

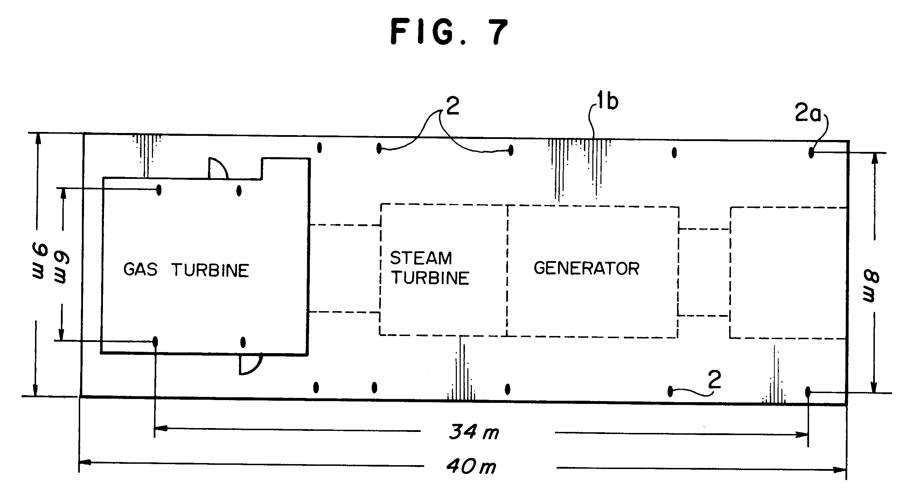

Fig. 6 is a top plan view of a steam turbine power generator, as viewed from the top portion. Fig. 7 is a top plan view of a cogeneration power plant, as viewed from the top portion. In the illustrated steam turbine power generator, a high pressure turbine, lower pressure turbines and a generator are connected to one another in series. In the cogeneration power plant, a gas turbine, a steam turbine and a generator are connected to one another in series. Because these respective components for constituting the steam turbine power generator and the cogeneration power plant are heavy, a serious trouble often happens in operation when the positions of the components are relatively sinked. For the reasons, the components are adapted to be arranged on a single foundation. This single foundation is designated by 1a in Fig. 6, and it is designated by 1b in Fig. 7.

The reinforced concrete foundation is the largest structural component in the turbine plant. When the foundation sinks vertically by its own weight and a flatness of the overall upper surface of the foundation is broken, the positions of the heavy components constituting the turbine power generators are relatively sinked. If the turbine power generator is continuously operated without knowing the positional sinkage of the components, the components are greatly damaged, which results in loss of security or reliability of the overall electric power plant. It is accordingly necessary to measure an amount of vertical sinkage of the foundation at the time of setting the turbine power generator, and after the setting, the measurement needs to be periodically performed for the purpose of operating the electric power plant safely.

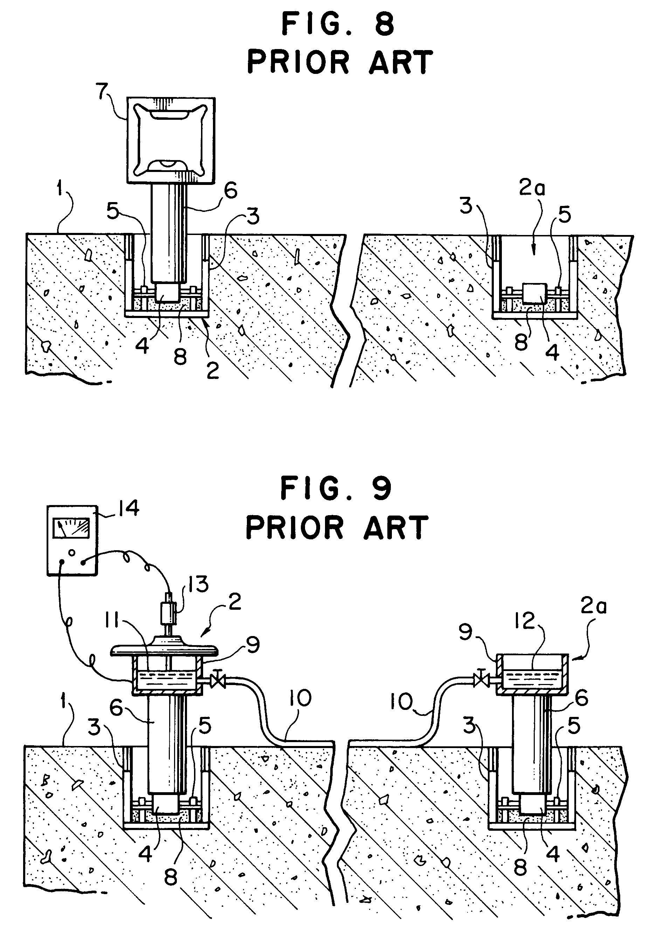

The amount of vertical sinkage of the foundation is determined by observing a relation between horizontal levels of water in liquid containers whose locations are marked by ● in Figs. 6 and 7 and a horizontal level of water in a reference liquid container 2a disposed at the right upper corner of Fig. 6. A value obtained from the reference liquid container 2a is used as a reference value. The relation between the horizontal levels of water in the liquid containers at the marked positions 2 and the horizontal level of water in the liquid container at the reference position is obtained by utilizing a principle such that water levels in a plurality of containers communicated through a connecting conduit are on the same plane, as disclosed in Japanese Patent Unexamined Publication No. 58-50423 or 2-115712. The prior art in which the aforesaid principle is applied to a measurement of an amount of vertical sinkage of the foundation, will be described with reference to Figs. 8 and 9.

As shown in Fig. 8, a distance piece 4 is temporarily disposed on a bottom portion of a casing 3 of which a top end is opened, and which is buried in a foundation 1. Adjusting bolts 5 are attached to the distance piece 4, for controlling an upper surface of the distance piece to be horizontal. A distance rod 6 is provided on the distance piece 4, and a leveller 7 is mounted on the rod 6. The adjusting bolts 5 are adjusted so that an upper surface of the leveller 7 becomes horizontal. When the upper surface of the leveller 7 becomes horizontal, the distance piece 4 is secured by filling grout 8 on the bottom of the casing 4. The distance rod 6 is disconnected except during the measurement of the vertical sinkage of the foundation.

When determining the amount of vertical sinkage of the foundation, as illustrated in Fig. 9, the distance rods 6 each having the same length are stood on the distance pieces 4 at a reference position 2a and at a target position 2 to be measured. Water cups 9 with the same volumes and shapes are attached on the distance rods 6. The two water cups 9 are connected to each other via a vinyl hose 10. Water is supplied into the respective cups 9, and the water in the cups 9 is left as it is until the water levels becomes stationary. The water levels in both cups 9 are positioned on the same plane because the cups 9 are connected to each other through the vinyl hose 10. Typically, when the foundation is manufactured the upper surface of the foundation 1 is not necessarily uniformly plane. It is accordingly requisite to measure a distance from an upper end of the water cup 9 to a water level in the water cup 9 by a depth micrometer 13 and a tester 14 at the time of the first measurement, and to memorize a relative difference between the measured distances obtained at the reference position and the target position. A relative water level difference obtained from the next measurement utilizing the same distance rods 6 and the same water cups 9 is compared with the previously memorized relative water level difference, thereby calculating the amount of vertical sinkage of the foundation.

In practice, when measuring the vertical sinkage of the foundation, the distance rods 6 are stood on the reference position 2a and the necessary target position in Fig. 6, for measuring the above-described relative water level difference. After the completion of the measurement, the distance rod 6, the water cup 9, the depth micrometer 13 and the tester 14 are removed and newly set on another target position to be measured, for measuring a relative water level difference between the target position 2 and the reference position 2a. Such procedure of measurement is successively carried out with respect to the respective target positions.

With the conventional measuring method taken in such a manner that the relative water level differences between a number of target positions 2 and the reference position 2a provided on the foundation shown in Fig. 6 or 7 are measured, the water cup 9, the depth micrometer 13 and the tester 14 have to be moved repeatedly between a number of measuring points of the target positions, so that the tedious working and large labor for the movement are necessary. Unfavorably, the measurement cannot rapidly be performed. As illustrated in Fig. 7, in the case where the measuring points exist inside of a separation wall of the gas turbine, the water cups cannot be connected a vinyl hose unless the separation wall is removed. As a result, the number of working steps for the measurement is undesirably increased. In the case shown in Figs. 6 and 7, a distance between the reference position 2a and the most remote target position is approximately 40m to 60m. The vinyl hose enough long to connect the water cups at the reference and most remote target positions must be manually conveyed at every measurement. In order to perform a measurement with a high reliability, it is necessary to extract air from the vinyl hose completely before the measurement. It takes a long time to inspect whether the air exists in such long vinyl hose or not, and further this inspection which requires a lot of time must be repeatedly performed at every measurement. The same may be said of the prior art disclosed in Japanese Patent Unexamined Publication Nos. 58-50423 and 2-115712. That is to say, the prior art is disadvantageous in that it takes along time to extract the air out of the long vinyl hose or connecting conduit, so that the inspection and repair of the power plant requires enormous time and the maintenance cost of the plant is increased.

### SUMMARY OF THE INVENTION

The invention aims to provide a foundation and a method of producing the same, and a method and an apparatus for measuring vertical sinkage of a foundation rapidly and accurately.

To achieve the above object of the invention, a foundation on which heavy installation is mounted, includes a plurality of liquid containers whose top ends are opened, the liquid containers being buried on an upper surface portion of the foundation, and a connecting conduit provided in the foundation so that it inclinedly extends from one side toward the other side of the foundation, the connecting conduit communicating with bottom portions of the upwardly opened liquid containers in the foundation.

The foundation may further includes a stand member fixed in each of the upwardly opened liquid containers.

Also, to achieve the object of the invention, in a method of producing a foundation on which heavy installation is mounted, a plurality of liquid containers whose top ends are opened, are buried on an upper surface portion of the foundation, and a connecting conduit is provided in the foundation so that it inclinedly extends from one side toward the other side of the foundation, the connecting conduit communicating with bottom portions of the upwardly opened liquid containers in the foundation.

Further, in the method of producing a foundation, a stand member is further fixed in each of the upwardly opening liquid containers.

To realize the object, in a method of measuring an amount of vertical sinkage of a foundation on which heavy installation is mounted, the foundation including a plurality of liquid containers whose top ends are opened, the liquid containers being buried on an upper surface portion of the foundation and a connecting conduit provided in the foundation so that it inclinedly extends from one side toward the other side of the foundation, the connecting conduit communicating with bottom portions of the upwardly opened liquid containers in the foundation, liquid is supplied to the upwardly opened liquid containers through the connecting conduit, a distance from an upper surface of the foundation to a liquid surface level in each upwardly opened liquid container is measured, and the amount of vertical sinkage of the foundation is obtained depending on a change of a relative difference between the measured values at each liquid container to be measured and at the reference liquid container.

In the above method, also, a water level sensor for measuring a distance from the upper surface of the foundation to a liquid surface level may be attached to an opening port of each of the upwardly opened liquid containers, a measured value from the water level sensor is input into a data processor, and a change of a relative difference between the measured values at each liquid container to be measured and at the reference liquid container is automatically displayed, thereby obtaining the amount of vertical sinkage of the foundation.

Further, in the above method, the water level sensor may be a gap detector.

Moreover, to achieve the object of the invention, in a method of measuring an amount of vertical sinkage of a foundation on which heavy installation is mounted, the foundation including a plurality of liquid containers whose top ends are opened, the liquid containers being buried on an upper surface portion of the foundation, and a connecting conduit provided in the foundation so that it inclinedly extends from one side toward the other side of the foundation, the connecting conduit communicating with bottom portions of the upwardly opened liquid containers in the foundation, and a stand member fixed in each of the upwardly opened liquid containers, a depth micrometer is attached to the stand member in each of the upwardly opened liquid containers in order to measure a distance from an upper surface of the foundation to a liquid surface level, and the amount of vertical sinkage of the foundation is obtained from a change of a relative difference between the measured values at each liquid container to be measured and at the reference liquid container.

Further, to achieve the above object, an apparatus of measuring an amount of vertical sinkage of a foundation on which heavy installation is mounted, includes a plurality of liquid containers whose top ends are opened, the liquid containers being buried on an upper surface portion of the foundation, a connecting conduit provided in the foundation so that it inclinedly extends from one side toward the other side of the foundation, the connecting conduit communicating with bottom portions of the upwardly opened liquid containers in the foundation, water level sensors respectively disposed in the upwardly opened liquid containers, a data processor connected to the water level sensors for processing measured values of the sensors, and a display device for indicating a change of a difference between the processed measured values at each liquid container to be measured and at the reference liquid container.

In the above apparatus, the water level sensors may be gap detectors.

Moreover, to achieve the object of the invention, an apparatus of measuring an amount of vertical sinkage of a foundation on which heavy installation is mounted, includes a plurality of liquid containers whose top ends are opened, the liquid containers being buried on an upper surface portion of the foundation, a connecting conduit provided in the foundation so that it inclinedly extends from one side toward the other side of the foundation, the connecting conduit communicating with bottom portions of the liquid containers in the foundation, stand members fixed in the upwardly opened liquid containers, and depth micrometers to be attached to the stand members in order to measure a distance from an upper surface of the foundation to a liquid surface level in the upwardly opened liquid container.

In the invention, the connecting conduit is provided in the foundation so that it inclinedly extends through the foundation. As a result, when water is supplied in the upwardly opened liquid containers, even if air exists in the connecting conduit, the air moves upwardly along an inner wall of the connecting conduit so as to naturally come out of either liquid container or an end portion of the connecting conduit. Accordingly, labor for extracting the air becomes unnecessary. Further, it is not required to manually connect the liquid containers through a vinyl hose or carry the vinyl hose. Therefore, according to the invention, the accurate measurement can be realized in a short period of time.

### BRIEF DESCRIPTION OF THE DRAWINGS

Fig. 1 is a cross-sectional view of an essential portion of a foundation according to a first embodiment of the invention;
Fig. 2 is an enlarged view of a liquid container shown in Fig. 1;
Fig. 3 is a schematic view illustrating a state in which the liquid containers are connected to each other through a connecting conduit;
Fig. 4 is a cross-sectional view of a liquid container in a foundation according to a second embodiment of the invention;
Fig. 5 is a schematic view illustrative of a processing manner of measured data by means of a data processor;
Fig. 6 is a top plan view of a foundation for a steam turbine power generator;
Fig. 7 is a top plan view of a foundation for a cogeneration power plant;
Fig. 8 is a view for explanation of setting of a liquid container for measuring an amount of vertical sinkage of a conventional foundation; and
Fig. 9 is a view for explanation of measurement of the vertical sinkage of the conventional foundation.

### DETAILED DESCRIPTION OF TEE PREFERRED EMBODIMENTS

Preferred embodiments of the invention will be described hereinafter with reference to the drawings.

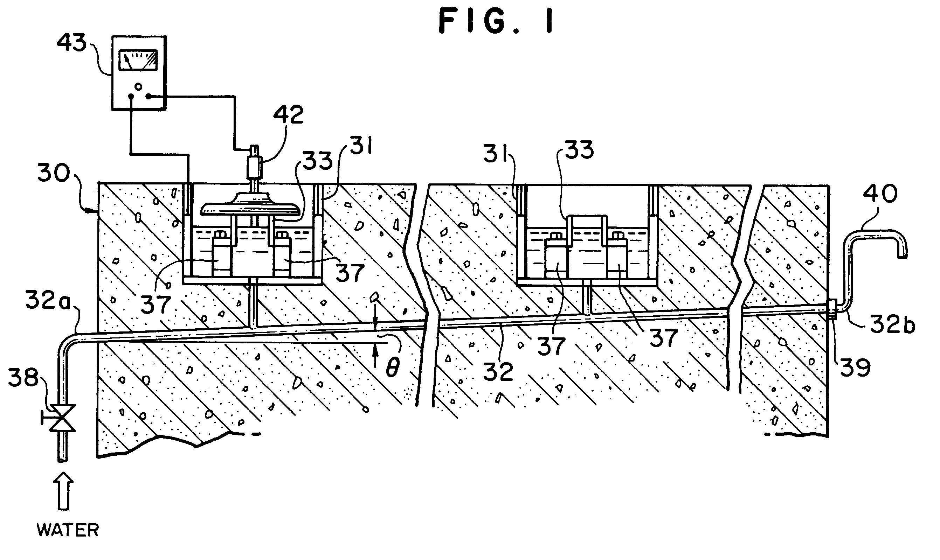

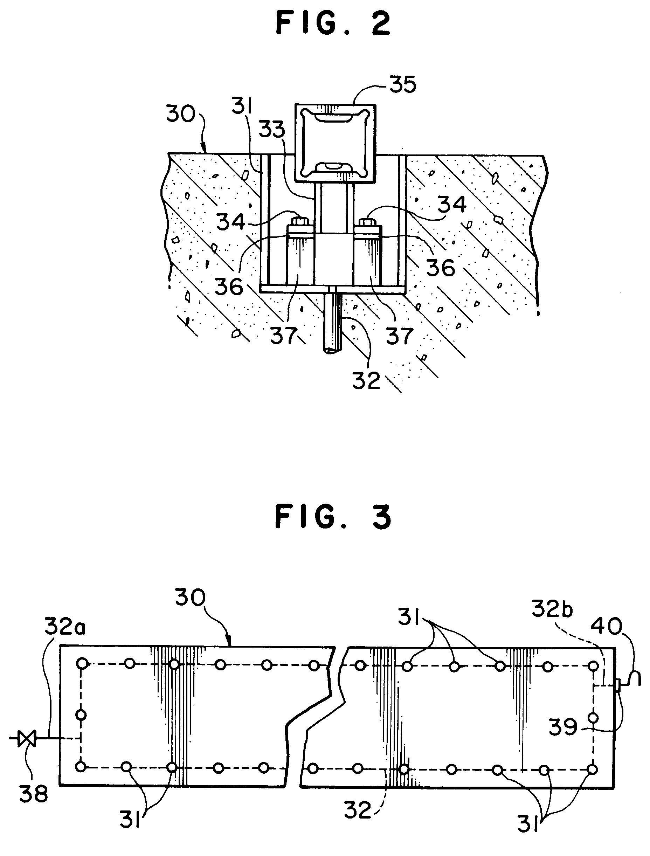

Fig. 1 is a cross-sectional view of an essential portion of a foundation according to a first embodiment of the invention. In case of producing a foundation 30 of reinforced concrete, liquid containers 31 whose top ends are opened are buried at appropriate positions on an upper surface of the foundation 30, the liquid containers 31 being made of electrically conductive materials. A connecting conduit 32 is provided for communication with bottom portions of the liquid containers 31 in the foundation 30 to extend from one side toward the other side of the foundation at an inclination angle of ϑ with respect to a horizontal line. Fig. 3 is a schematic view showing a state in which the respective liquid containers 31 are connected to each other through the connecting conduit 32.

Fig. 2 is an enlarged cross-sectional view of the liquid container 31. A stand 33 is fixed in the liquid container 31 by bolts 34 so that an upper end of the stand 33 is horizontally disposed. In order to set the stand 33 horizontally, a leveller 35 is mounted on the stand 33, and an appropriate number of shims 36 to be inserted between a bottom portion of the stand 33 and an upper surface of a pedestal 37 is selected.

A lower end 32a of the inclined connecting conduit 32 is, as shown in Fig. 1, protruded from the foundation 30, to which lower end 32a an opening/closing valve 38 is attached. A tube fitting 39 is fixed to an upper end 32b of the inclined connecting conduit 32 on a side portion of the foundation 30. A bent pipe 40 is connected to the tube fitting 39. The bent pipe 40 is turned upwardly from the connecting portion of the tube fitting 39, and is then turned horizontally. An upper end of the upwardly extending portion of the bent pipe having a length h is designed to be situated within a range from the bottom portion of the liquid container 31 to the upper end portion of the stand 33.

When an amount of vertical sinkage of the foundation 30 is not measured, a lid is put on the opening end of each liquid container 31. When measuring the amount of vertical sinkage of the foundation 30, the lid is removed from the liquid container, and the opening/closing valve 38 is opened to supply water into the connecting conduit 32 from the side of the end portion 32a. When the supplied water overflows from the other end of the bent pipe 40, the opening/closing valve 38 is closed. The respective liquid containers 31 are suitably filled with water 41, so that surfaces of water in the liquid containers 31 and the uppermost portion of the water in the bent pipe 40 are substantially on the same plane. It is of course unnecessary to positively supply the water until the water overflows from the vent pipe 40. It is needless to say that the valve 38 may be closed when the levels of the supplied water in the liquid containers 31 arrive at suitable positions. According to the invention, as mentioned above, the water is supplied from the lower end of the connecting conduit 32 inclinedly extending through the foundation 30. The water flows into the liquid container 31 till the water level reaches a desired location. For the reasons, the water is smoothly supplied to the containers 31 without generating air lock in the connecting conduit 32, which is obstructive to measurement of the amount of vertical sinkage of the foundation 30.

After the completion of the water supply, the personnel for measurement walks around the foundation 30 handling the depth micrometer 42 and the tester 43, for measuring the distance from the upper end surface of the stand 33 to the water level in each liquid container 31. At the time of the measurement, the micrometer is rotated to gradually lower a measuring probe of the depth micrometer 42 toward the liquid surface of the water in the liquid container, and a value of electric resistance between the measuring probe and the liquid container 31 is monitored by means of the tester 43. In the case where the measuring probe comes into contact with the water, a closed circuit from the tester through the measuring probe, the water and the liquid container to the tester is formed, through which closed circuit an electric current flows. When the electric resistance value is rapidly decreased, the micrometer is read. The measurement is carried out in the above-mentioned manner with respect to all the liquid containers 31. The measured distance from the upper end surface of the stand 33 to the water level at the reference position is compared with the distance from the upper end surface of the stand to the water level at each target measuring position. The obtained difference is compared with the stored data from the previous measurement, so that the amount of vertical sinkage of the foundation 30 is calculated.

According to the above embodiment of the invention, it is unnecessary to move measuring instruments except the depth micrometer and the tester at the time of measurement, so that the number of personnel for measurement can be considerably reduced. Also, because the connecting conduit is buried to extend inclinedly through the foundation when the foundation is being manufactured, a period of time required for extracting air from the connecting conduit can be shortened, though it conventionally takes enormous time to extract the air from the conduit. Further, the invention has such an advantage that the measurement can be accurately carried out in a short period of time because the air lock is not generated in the conduit at the time of measurement. The foundation is subjected to the measurements at least five times after the foundation is set till the operation of the plant is started, and the foundation is periodically inspected after starting the operation. The advantages of the invention can thus fully be enjoyed. According to the invention, it is possible to accurately measure the amount of vertical sinkage of the foundation without much labor in a short period of time, so that the number of measurement can be increased and a reliability of the plant can be enhanced.

A second embodiment of the invention which automatically carries out the above-described measurement, will now be described.

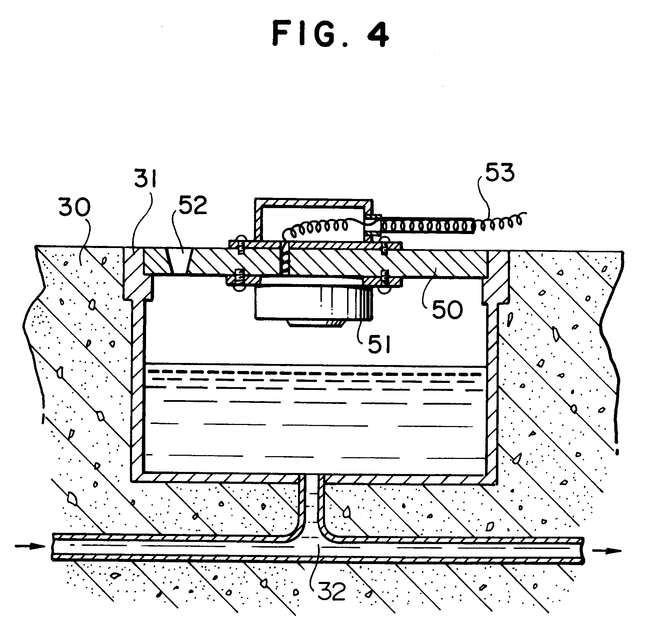

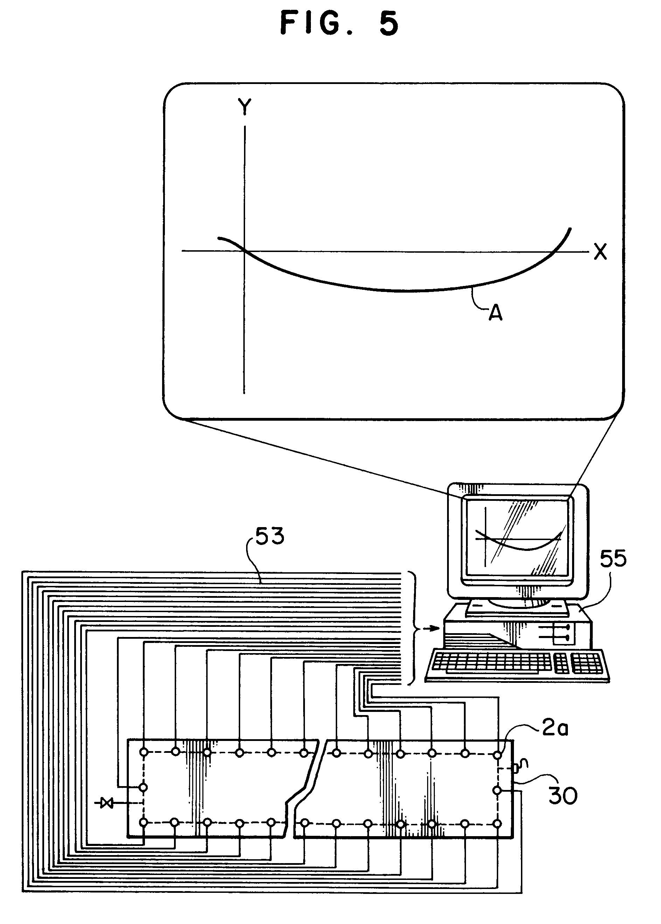

Fig. 4 is a cross-sectional view of a liquid container in a foundation according to the second embodiment of the invention. The second embodiment is similar to the first embodiment illustrated in Fig. 1, in that a bottom portion of each liquid container 31 (only one liquid container is shown) whose top end is opened, is communicated with a connecting conduit 32 inclinedly extending through the foundation 30 from one side toward the other side. In the second embodiment, however, an opening end of the liquid container 31 is covered with a lid 50 to which a water level sensor such as a gap detector 51 is attached. The gap detector 51 automatically measures a distance to a level of water suitably filled in the liquid container. A detection signal of the gap detector 51 is supplied into a data processor 55 shown in Fig. 5 through a signal conductor 53. Additionally, reference 52 in Fig. 4 designates an air vent formed in the lid 50 in order not to seal the liquid container 31.

In the second embodiment, a personal computer is used as the data processor 55. A measurement value input into the data processor 55 through the signal conductor 53 from each gap detector 51 at every predetermined interval of time, is stored in a memory of the data processor 55. A relative difference between the distance from the upper end surface of the foundation to the water level in the liquid container at the reference position and the distance from the upper end surface of the foundation to the water level in each liquid container at the target positions to be measured, is calculated. More specifically, the data of the relative differences between the distance from the upper end surface of the foundation to the water level at the reference position and the distances from the upper end surface of the foundation to the water levels at the target positions to be measured at the time of the completion of manufacturing the foundation 30, are read out. The differences at that time are referred to as 0, and indicated as a line X displayed in the cathode-ray tube of the computer of Fig. 5. If the relative differences between the distance at the reference liquid container and the distances at the target liquid containers laterally arranged in the foundation 30, which differences are obtained by the measurement, are indicated by a curved line A, it is possible to surely find out the amount of vertical sinkage and what portion of the foundation 30 largely sinks.

According to the second embodiment of the invention, the measurement of the amount of vertical sinkage of the foundation can be automatically accurately performed without tedious labor. Further, since the amount of vertical sinkage is quickly output in the graph displayed by the computer, the cost in personnel investment can be considerably reduced and a reliability of the plant can be more enhanced.

## Claims

1. A foundation (30) on which heavy installation is mounted, characterized by including a plurality of liquid containers (31) whose top ends are opened, said liquid containers (31) being buried on an upper surface portion of said foundation, and a connecting conduit (32) provided in said foundation so that it inclinedly extends from one side toward the other side of said foundation, said connecting conduit (32) communicating with bottom portions of said upwardly opened liquid containers (31) in said foundation(30).

2. A foundation according to Claim 1, characterized by further including a stand member (33) fixed in each of said upwardly opened liquid containers (31).

3. A method of producing a foundation (30) on which heavy installation is mounted, characterized in that a plurality of liquid containers (31) whose top ends are opened, are buried on an upper surface portion of said foundation, and a connecting conduit (32) is provided in said foundation so that it inclinedly extends from one side toward the other side of said foundation, said connecting conduit communicating with bottom portions of said upwardly opened liquid containers in said foundation.

4. A method of producing a foundation according to Claim 3, characterized in that a stand member (33) is further fixed in each of said upwardly opening liquid containers.

5. A method of measuring an amount of vertical sinkage of a foundation (30) on which heavy installation is mounted, said foundation (30) including a plurality of liquid containers (31) whose top ends are opened, said liquid containers being buried on an upper surface portion of said foundation and a connecting conduit (32) provided in said foundation (30) so that it inclinedly extends from one side toward the other side of said foundation, said connecting conduit (32) communicating with bottom portions of said upwardly opened liquid containers (31) in said foundation, characterized in that liquid is supplied to said upwardly opened liquid containers through said connecting conduit (32), a distance from an upper surface of said foundation to a liquid surface level in each upwardly opened liquid container is measured, and the amount of vertical sinkage of said foundation is obtained depending on a change of a relative difference between the measured values at each liquid container (31) to be measured and at the reference liquid container (31).

6. A method of measuring an amount of vertical sinkage of a foundation (30) according to Claim 5, characterized in that a water level sensor for measuring a distance from the upper surface of said foundation to a liquid surface level is attached to an opening port of each of said upwardly opened liquid containers (31), a measured value from said water level sensor is input into a data processor (55) and a change of a relative difference between the measured values at each liquid container (31) to be measured and at the reference liquid container (31) is automatically displayed, thereby obtaining the amount of vertical sinkage of said foundation (30).

7. A method of measuring an amount of vertical sinkage of a foundation according to Claim 6, characterized in that said water level sensor is a gap detector (51).

8. A method of measuring an amount of vertical sinkage of a foundation (30) on which heavy installation is mounted, said foundation including a plurality of liquid containers (31) whose top ends are opened, said liquid containers being buried on an upper surface portion of said foundation, and a connecting conduit (32) provided in said foundation so that it inclinedly extends from one side toward the other side of said foundation, said connecting conduit communicating with bottom portions of said upwardly opened liquid containers in said foundation, and a stand member (33) fixed in each of said upwardly opened liquid containers, characterized in that a depth micrometer (42) is attached to said stand member (33) in each of said upwardly opened liquid containers in order to measure a distance from an upper surface of said foundation to a liquid surface level, and the amount of vertical sinkage of said foundation is obtained from a change of a relative difference between the measured values at each liquid container to be measured and at the reference liquid container.

9. An apparatus for measuring an amount of vertical sinkage of a foundation (30) on which heavy installation is mounted, characterized by including a plurality of liquid containers (31) whose top ends are opened, said liquid containers being buried on an upper surface portion of said foundation (30) a connecting conduit (32) provided in said foundation so that it inclinedly extends from one side toward the other side of said foundation, said connecting conduit (32) communicating with bottom portions of said upwardly opened liquid containers (31) in said foundation (30), water level sensors respectively disposed in said upwardly opened liquid containers, a data processor (55) connected to said water level sensors for processing measured values of said sensors, and a display device for indicating a change of a relative difference between the processed measured values at each liquid container to be measured and at the reference liquid container.

10. An apparatus for measuring an amount of vertical sinkage of a foundation according to Claim 9, characterized in that said water level sensors are gap detectors (51).

11. An apparatus for measuring an amount of vertical sinkage of a foundation (30) on which heavy installation is mounted, characterized by including a plurality of liquid containers (31) whose top ends are opened, said liquid containers being buried on an upper surface portion of said foundation, a connecting conduit (32) provided in said foundation so that it inclinedly extends from one side toward the other side of said foundation (30) , said connecting conduit (32) communicating with bottom portions of said liquid containers (31) in said foundation, stand members (33) fixed in said upwardly opened liquid containers, and depth micrometers (42) to be attached to said stand members (33) in order to determine a distance from an upper surface of said foundation (30) to a liquid surface level in said upwardly opened liquid container (31).
